Europäisches Patentamt

European Patent Office

Office européen des brevets

(19)

(11) Publication number: **0 335 578**

**A2**

## (12) EUROPEAN PATENT APPLICATION

(21) Application number: 89302847.2

(22) Date of filing: 22.03.89

(51) Int. Cl.⁴: **G01S 15/89** , **G10K 11/34** , **G01S 7/52**

(30) Priority: 28.03.88 US 173767

(43) Date of publication of application:
04.10.89 Bulletin 89/40

(84) Designated Contracting States:
DE FR GB NL

(71) Applicant: Hewlett-Packard Company
3000 Hanover Street
Palo Alto California 94304(US)

(72) Inventor: Snyder, Richard A.
138 Town Farm Road
Chester New Hampshire 03036(US)

(74) Representative: Williams, John Francis et al
J.F. Williams & Co 34 Tavistock Street
London WC2E 7PB(GB)

(54) **Ultrasound imaging system utilizing two or more simultaneously-active apertures.**

(57) A phased array linear scanner (40) for an ultrasound imaging system includes two or more simultaneously-active acoustic apertures (42,44). A linear transducer array includes several hundred closely-spaced transducer elements ($40_1$-$40_3$). First and second acoustic apertures (42,44) are defined by selecting first and second groups of transducer elements ($40_1$-43) in the transducer array. Phased acoustic pulses are simultaneously transmitted along first and second scan lines (50,56) by energising the first and second acoustic apertures (42,44). Linear scanning is performed by displacing the first and second acoustic apertures (42,44) across the array in phase. The apertures (42,44) are displaced on the array by energising different sets of transducer elements ($40_1$-$40_3$). Preferably, the apertures (42,44) are spaced apart to limit interference. By concurrent scanning with two or more acoustic apertures (42,44) , the speed of image formation is significantly increased. Scanning with two or more acoustic apertures (42,44) is particularly useful in colour rate imaging where multiple samples must be taken along each scan line (50,56).

FIG. 2

# ULTRASOUND IMAGING SYSTEM UTILIZING TWO OR MORE SIMULTANEOUSLY-ACTIVE APERTURES

This invention relates to ultrasound imaging systems using phased array scanners for linear scanning and, more particularly, to phased array scanners using two or more simultaneously-active apertures.

The phased array ultrasound scanner comprises a linear array of transducer elements which transmit ultrasonic waves and receive reflections thereof from objects in the path of the ultrasonic waves. The transducer elements each produce ultrasonic waves which collectively form an ultrasonic beam that can be steered in a desired direction and can be focused at a point along the beam direction. Steering and focusing are accomplished by delaying the electrical signals supplied to each transducer element in order to compensate for the different distances between the focal point and each transducer element. The beam direction and the focal point can be varied by changing the signal delays.

Typically, the linear array contains a large number of transducer elements, and a selected subset of the array elements is energized to transmit an ultrasonic beam along a scan line. Reflections from the direction of the scan line are sensed by the transducer elements and converted to an electrical signal that represents one line of an image. The selected subset of transducer elements used to transmit and receive ultrasonic waves along a scan line is known as an acoustic aperture. An image of a scanned object is produced by displacing the acoustic aperture step by step across the array. In linear scanning, the scan lines are usually parallel to each other and are at a selected angle to the face of the array of transducer elements. The image, which may be displayed on a cathode ray tube, indicates echo intensity along each scan line.

Ultrasound imaging systems are frequently used for obtaining real time images of organs of the human body. Ultrasound imaging systems are also used in a Doppler mode which provides a display of blood flow velocity. Velocity is often presented as a "color flow" image. It is desirable in such imaging systems to produce an accurate and flicker-free display that has high resolution. Resolution is improved by scanning a large number of closely-spaced scan lines, the accuracy is improved by taking several samples on each scan line so that noise is averaged out. In color flow systems, it is necessary to take several samples on each scan line, since successive samples are compared to determine velocity. Since signals are weak, accuracy is improved by increasing the number of samples per scan line.

The time for an ultrasonic pulse to complete a round trip to and from a prescribed depth in the human body is essentially fixed. For a four centimeter depth of penetration, the round trip time is approximately 50 microseconds. In this example, 500 microseconds is required to repeat a scan line ten times, and the total frame time for a 200-line display is 100 milliseconds. At a 10 Hz frame rate, flicker is discernible. It is desirable to increase the frame rate without adversely affecting the accuracy and resolution of the ultrasound image. It is also desirable to increase the accuracy of the image without reducing the frame rate or the resolution.

It is a general object of the present invention to provide improved methods and apparatus for acoustic imaging.

It is another object of the present invention to provide methods and apparatus for high speed acoustic imaging.

It is a further object of the present invention to provide methods and apparatus for acoustic imaging utilizing a linear array of transducer elements with two or more simultaneously-active acoustic apertures.

It is yet another object of the present invention to provide improved methods and apparatus for linear phased array ultrasound scanning.

According to the present invention, these and other objects and advantages are achieved in a scanner for an acoustic imaging system including an array of acoustic transducer elements for transmitting acoustic pulses. The scanner comprises first means for transmitting phased acoustic pulses that form a first beam along a first scan line by energizing a first acoustic aperture comprising a selected first set of adjacent transducer elements and second means for transmitting phased acoustic pulses that form a second beam along a second scan line by energizing a second acoustic aperture comprising a selected second set of transducer elements. The first and second transmitting means transmit acoustic pulses concurrently. The scanner further includes first receiver means for processing acoustic pulse echoes that are responsive to the acoustic pulses transmitted from the first acoustic aperture and providing a first signal representative of an image along the first scan line and second receiver means for processing acoustic pulse echoes that are responsive to acoustic pulses transmitted from the second acoustic aperture and providing a second signal representative of an image along the second scan line.

The scanner further includes means for sequentially displacing the first acoustic aperture along the array to provide a plurality of first signals representative of images along a plurality of different first scan lines and means for sequentially displacing the second acoustic aperture along the array to provide a plurality of second signals representative of images along a plurality of different second scan lines. The first and second acoustic apertures are displaced by energizing different sets of transducer elements.

In a preferred embodiment, the first and second acoustic apertures are spaced apart by a predetermined number of transducer elements as they are displaced along the array. The first and second acoustic apertures are preferably displaced simultaneously by one or more transducer elements at a time so as to maintain a fixed spacing therebetween. Each line can be scanned repeatedly a predetermined number of times before the acoustic apertures are displaced.

In another feature of the invention, the first transmitting means includes means for transmitting multiple acoustic pulses along each first scan line, each first scan line being oriented at a predetermined angle to a normal to the first acoustic aperture, and the second transmitting means includes means for transmitting multiple acoustic pulses along each second scan line, each second scan line being oriented at the same predetermined angle to a normal to the second acoustic aperture. As a result, velocity and turbulence information can be obtained from the acoustic pulse echoes.

According to another aspect of the invention, there is provided a method for acoustic imaging in a system including an array of acoustic transducer elements. The method comprises the steps of transmitting phased acoustic pulses that form a first beam along a first scan line by energizing a first set of adjacent transducer elements which define a first acoustic aperture, processing acoustic pulse echoes received by the first acoustic aperture and providing a first signal representative of an image along the first scan line, transmitting phased acoustic pulses that form a second beam along a second scan line by energizing a second set of adjacent transducer elements which define a second acoustic aperture, and processing acoustic pulse echoes received by the second acoustic aperture and providing a second signal representative of an image along the second scan line. The steps of transmitting acoustic pulses from the first acoustic aperture and processing acoustic pulse echoes received by the first acoustic aperture are performed concurrently with the steps of transmitting acoustic pulses from the second acoustic aperture and processing acoustic pulse echoes received by the second acoustic aperture.

The acoustic imaging method preferably includes the steps of sequentially displacing the first acoustic aperture along the transducer elements of the array to provide a plurality of first signals representative of images along a plurality of different first scan lines and sequentially displacing the second acoustic aperture along the transducer elements of the array to provide a plurality of second signals representative of images along a plurality of different second scan lines.

By scanning simultaneously with two or more acoustic apertures, the frame rate can be increased or the number of scan lines or samples per scan line can be increased. By suitable spacing on the linear array, the acoustic apertures can be energized concurrently, while interference between apertures is limited.

For a better understanding of the present invention together with other and further objects, advantages and capabilities thereof, reference is made to accompanying drawings which are incorporated herein by reference and in which:

FIG. 1 is a schematic diagram illustrating linear scanning with a single aperture in accordance with the prior art;

FIG. 2 is a schematic diagram illustrating a linear transducer array utilizing two simultaneously-active apertures to form two ultransonic beams perpendicular to the array;

FIG. 3. is a schematic diagram illustrating a linear transducer array utilizing two simultaneously-active apertures to form two ultrasonic beams oriented at an angle with respect to a normal to the array;

FIG. 4 is a schematic diagram illustrating a preferred technique for linear scanning with two simultaneously-active apertures;

FIG. 5 is a schematic diagram illustrating a linear transducer array utilizing two simultaneously-active apertures for forming intersecting ultrasonic beams;

FIG. 6 is a simplified block diagram illustrating a system for acoustic imaging utilizing two simultaneously-active apertures; and

FIG. 7 is a simplified block diagram of the receiver of FIG. 6.

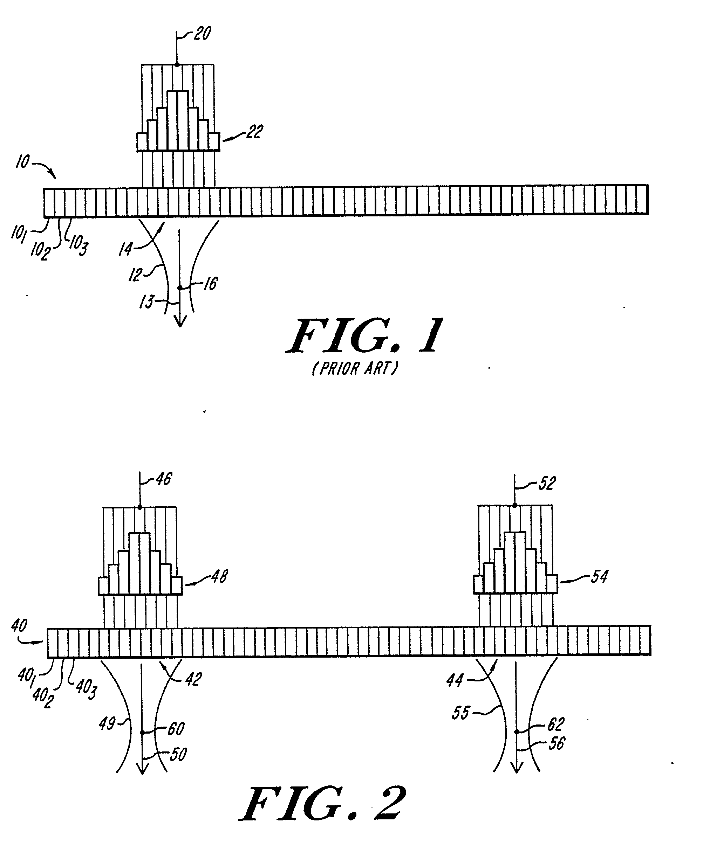

Linear array scanning in accordance with the prior art is illustrated in schematic form in FIG. 1. A linear array 10 of ultrasonic transducer elements $10_1$, $10_2$, $10_3$, etc. is fabricated in accordance with known techniques. The array 10 may include hundreds of closely-spaced piezoelectric elements. The elements of the array 10 are capable of transmitting ultrasonic pulses and receiving ultrasonic pulse echoes from scattering sites in the object being imaged.

A group of array elements is selected for transmission of an ultrasonic beam 12 along a scan line 13. The group of elements selected for transmission comprise an acoustic aperture 14. In the example of FIG. 1, the acoustic aperture 14 comprises eight transducer elements. In a practical scanning application, the acoustic aperture typically comprises a substantially larger number of elements in order to obtain a focused beam at a desired penetration depth. The ultrasonic beam 12 is focused at a focal point 16 by applying time-delayed pulse signals to the elements of acoustic aperture 14 so that the time at which acoustic pulses from each transducer element arrive at focal point 16 is the same. A transmit pulse signal applied to line 20 passes through variable delay elements 22 and is applied to the transducer elements of acoustic aperture 14. In order to direct beam 12 perpendicular to the linear array 10, the delays in the center of acoustic aperture 14 are relatively long, while the delays at the outer edges of acoustic aperture 14 are relatively short. The delay elements 22 are adjusted so that wavefronts from each transducer element in acoustic aperture 14 reach focal point 16 at the same time and add constructively.

Scattering sites in the region of focal point 16 cause a portion of the ultrasonic beam 12 to be reflected back to acoustic aperture 14. The reflected ultrasonic beam is sensed by the elements of acoustic aperture 14, and electrical signals are induced on the repective input lines. By utilizing the same or a like set of delay elements, the acoustic aperture 14 is effectively focused on the point 16 for receiving reflected signals. By varying the delays of elements 22, the acoustic aperture 14 can by dynamically focused for sensing reflected signals along scan line 13.

In order to perform linear scanning with the array 10, the acoustic aperture 14 is displaced along the array 10 by successively energizing different sets of array elements. Typically, the acoustic aperture 14 is displaced, and an ultrasonic beam is transmitted along a second scan line parallel to scan line 13. The acoustic aperture 14 is successively shifted across the array 10 and transmits ultrasonic beams along a plurality of scan lines. The received signals provide a representation of the object along each scan line as a function of distance from the array 10. When the received signals along the different scan lines are applied to a cathode ray tube, an image of the internal structure of the object is displayed.

In a practical system for medical ultrasound imaging, a linear array of ultrasonic transducer elements typically includes hundreds of elements. In an example of the present invention, the array includes 288 transducer elements, and up to (for example) 96 elements of the array may be used to transmit a focused ultrasonic beam. The linear array can be include any convenient number of elements, and the number of transducer elements selected as an acoustic aperture for transmitting an ultrasonic beam depends on the required depth of focus. Preferably, the number of elements in the array is an integer multiple of the number of elements in the acoustic aperture. The large number of elements in the acoustic aperture is necessary in order to provide a steered and focused beam at depths of four centimeters or more without generating a grating lobe. In most applications, however, the region of interest is at a shallower depth, and an ultrasound beam can be focused at the shallower depth with fewer transducer elements. For example, a system for ultrasound imaging of the carotid artery must have the capability of scanning at depths up to four centimeters. However, in most patients, the carotid artery is located at approximately two centimeters beneath the skin, and the large acoustic aperture is not fully utilized. The present invention takes advantage of the unused capability of the large acoustic aperture when scanning at shallow depths and provided two or more smaller, simultaneously-active acoustic apertures.

As noted above, the time required for obtaining an image along a single scan line is limited by velocity of the acoustic wave through the object being imaged, usually the human body. For an ultrasound pulse in human tissue, the round-trip time for a four centimeter penetration depth is about 50 microseconds. It is desirable in ultrasound imaging to obtain a large number of samples along a large number of scan lines in order to improve accuracy and resolution. In addition, it is desirable to utilize a high frame rate so that a real time display can be provided without unacceptable flicker. As used herein, the term "sample" refers to recieved signal from a single ultrasonic pulse transmitted along a specified scan line. Several samples may be taken in succession along a single scan line. "Scan line" refers to the parallel, spaced-apart lines along which samples are taken to form an image. "Frame rate" refers to the rate at which complete images are formed.

In color flow imaging, the received signals along each scan line are processed to provide information regarding blood flow velocity and turbulence. Blood flow turbulence is indicative of an obstruction in the blood vessel. For color flow measurements, the ultrasonic beam is transmitted at an angle relative to a normal to the linear array, and multiple acoustic pulses are transmitted along each scan line. For each pulse transmitted along the scan line, the amplitude and phase of the received signal are measured at every point along the scan line. The phases of signals resulting from successive acoustic pulses are compared at each point along the scan line. The velocity at each point along the scan line is calculated from the measured phase change and the known time between acoustic pulses. In color flow imaging, the received signals are usually weak, and one signal comparison is inadequate to provide a reliable measurement. Multiple acoustic pulses are transmitted along each scan line so that multiple phase comparisons can be made, thereby averaging out noise from the weak signals. Different flow rates are displayed on a CRT as different colors.

Color flow imaging is also used to measure turbulence in blood flow. When the measured phase differences are all approximately the same, the flow at that particular point is uniform. Either noise or turbulence in the flow can cause the phase difference to vary from measurement to measurement. The distinction between noise and turbulence can be made by measuring the amplitude of the received signal. When the amplitude is relatively strong, the phase difference variations are caused by turbulence in the blood flow. By increasing the number of acoustic pulses transmitted, and thereby the number of phase comparisons, turbulence can more reliably be determined. It can be seen that for color flow imaging, it is desirable to increase the number of acoustic pulses transmitted per scan line in order to increase the accuracy with which both velocity and turbulence are imaged. However, as noted above, the time required for a single measurement is fixed by the round trip time for an ultrasonic signal, and the time to complete an image frame is increased by increasing the number of acoustic pulses transmitted.

In accordance with the present invention, two or more ultrasonic beams are concurrently transmitted from different acoustic apertures in a linear array, and the reflected ultrasonic beams are processed concurrently. Referring now to FIG. 2, a linear array 40 includes a plurality of transducer elements $40_1$, $40_2$, $40_3$, etc. A first group of eight array elements is energized to form a first acoustic aperture 42, and a second group of eight transducer elements is energized to form a second acoustic aperture 44. In the example of FIG. 2, each of the acoustic apertures 42, 44 includes eight transducer elements for illustrative purposes. In a practical system, each acoustic aperture 42, 44 would typically include a larger number of transducer elements. An ultrasonic pulse signal applied to line 46 passes through programmable delay elements 48 and energized the transducer elements of acoustic aperture 42 to transmit an ultrasonic beam 49 along scan line 50. Similarly, an ultrasonic pulse signal applied to line 52 passes through programmable delay elements 54 and energizes the transducer elements of acoustic aperture 44 to transmit an ultrasonic beam 55 along scan line 56. The beams 49 and 55 transmitted by apertures 42 and 44 may be focused at points 60 and 62, respectively. The programmable delays for each of the elements 48 and 54 are selected so that beams 49 and 55 are individually focused at points 60 and 62, respectively. The relative delays of elements 48 and 54 are represented schematically in FIG. 2 by the lengths of the blocks.

Acoustic waves reflected from the scattering sites along each of the scan lines 50 and 56 are received by the transducer elements of the respective apertures 42 and 44 and induce received electrical signals on the transducer elements. The received signals are processed and are displayed to provide images of the structure along each scan line.

In accordance with the invention, acoustic signals are transmitted and received through apertures 42 and 44 concurrently. While transmitting and receiving occurs concurrently, it is not necessary that the ultrasonic beams 49 and 55 be transmitted through apertures 42 and 44 in phase. Since the images along scan lines 50 and 56 are obtained concurrently, the rate at which image information is accumulated is doubled relative to the configuration of FIG. 1.

It will be understood that two or more concurrently-operated acoustic apertures are included within the scope of the present invention. The number of apertures that can be utilized as a practical matter is limited by the total number of transducer elements in linear array 40, the number of transducer elements in each acoustic aperture and the required spacing between acoustic apertures to prevent an unacceptable level of interference. The number of transducer elements per acoustic aperture depends on the required penetration depth; fewer elements are required for shallower penetration depths. The spacing between acoustic apertures is limited by interference between ultrasonic beams 49 and 55. Interference occurs when a reflection of beam 49 is received by aperture 44 and vice versa. It is usually desirable to space the apertures 42 and 44 apart by at least a few transducer elements.

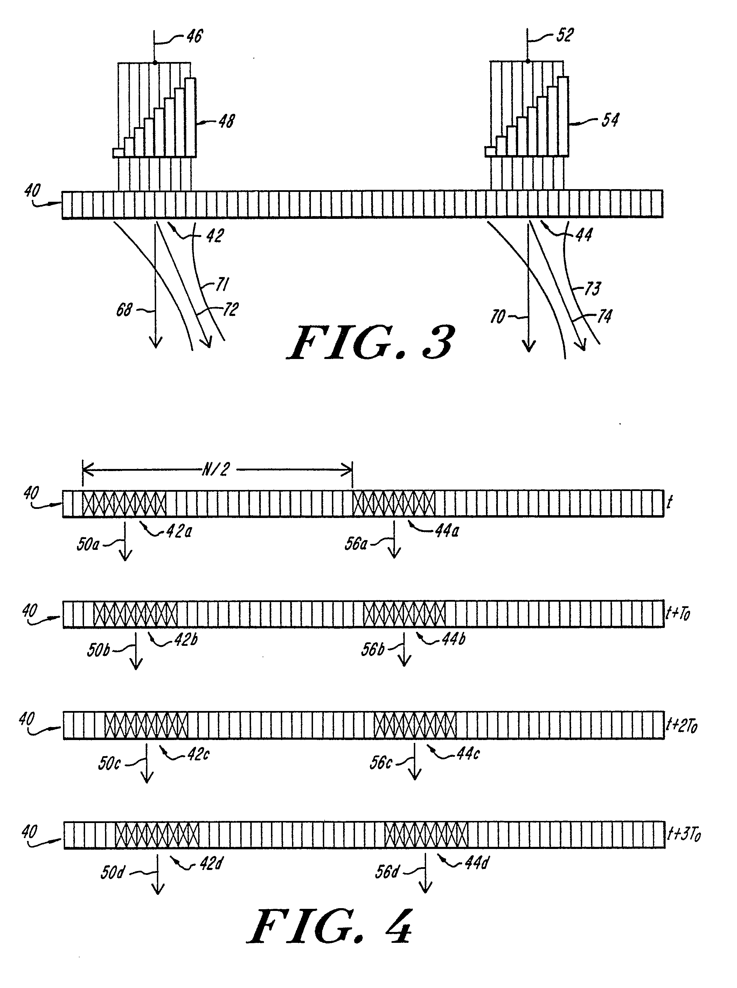

The scan lines 50 and 56 are shown in FIG. 2 perpendicular to the face of the linear array 40. The present invention can also be utilized to transmit ultrasonic beams at an angle with respect to a normal to the face of the linear array, as shown in FIG. 3. By suitable selection of the time delays of each of the delay elements 48 and 54, acoustic apertures 42 and 44 are energized in a manner which steers, or directs, the ultrasonic beams at an angle relative to normals 68 and 70. Acoustic aperture 42 transmits an ultrasonic beam 71 along a scan line 72 at a predetermined angle relative to normal 68, and acoustic aperture 44 transmits an ultrasonic beam 73 along scan line 74 at the same predetermined angle relative to the normal 70. Scan lines that are angled with respect to the normal to the linear array are useful in color flow, or Doppler, imaging of blood flow. It will be understood that the acoustic apertures 42 and 44 can direct ultrasonic beams along scan lines 72, 74 that are oriented at any predetermined angle relative to the respective normal vectors 68, 70 within a range of about ±45° by appropriate selection of delays in elements 48 and 54.

In order to obtain an accurate, high resolution image, it is desirable to transmit acoustic beams through acoustic apertures 42 and 44 along scan lines 50 and 56 or along scan lines 72 and 74 a predetermined number of times, typically in the range of 8-16 times, before displacing the apertures in a scanning mode. The received signals are averaged and the effect of noise is substantially reduced. Also, as described above, it is necessary in color flow imaging to take multiple samples along each scan line due to the nature of the received signal processing. The present invention is particularly useful in this case to increase the speed of image formation.

The concurrent operation of two or more acoustic apertures in a linear array in accordance with the present invention is advantageously utilized for linear scanning. Linear scanning of the apertures 42 and 44 is illustrated in FIG. 4, with energized transducer elements indicated by X's. In a preferred embodiment, the apertures 42 and 44 are spaced apart by about N/2 transducer elements where N equals the total number of transducer elements in the linear array 40. At time t, apertures 42a and 44a are energized to transmit ultrasonic beams along scan lines 50a and 56a, and reflected signals are received by apertures 42a and 44a. Each aperture is then displaced to the right by one transducer element to form apertures 42b and 44b. Apertures 42b and 44b transmit ultrasonic beams along scan lines 50b and 56b, respectively, at time $t + T_0$, where $T_0$ is the time required to transmit and receive along each pair of scan lines. Similarly, at time $t + 2T_0$, apertures 42c and 44c transmit ultrasonic beams 50c and 56c, respectively. At time $t + 3T_0$, apertures 42d and 44d transmit ultrasonic beams along scan lines 50d and 56d. Scanning continues by displacing apertures 42 and 44 one transducer element to the right and transmitting acoustic beams from each aperture 42, 44 until the entire linear array has been traversed. When each acoustic aperture reaches the end of array 40, the aperture is reduced in width by two transducer elements for each displacement of one element and linear scanning is continued. Although resolution is reduced at the ends of the array, the width of the scan is effectively increased.

Since ultrasonic beams are transmitted along scan lines 50 and 56 simultaneously, the time required to traverse array 40 is half of what would be required with a single acoustic aperture. As a result, the time required to produce a complete frame of the image is reduced by half. Alternatively, the number of samples of each scan line or the number of scan lines can be increased, thereby increasing accuracy an resolution, while maintaining a constant frame rate. As noted above, the two aperture configuration illustrated in FIG. 4 is only an example of the present invention. Three or more acoustic apertures can be utilized under appropriate circumstances.

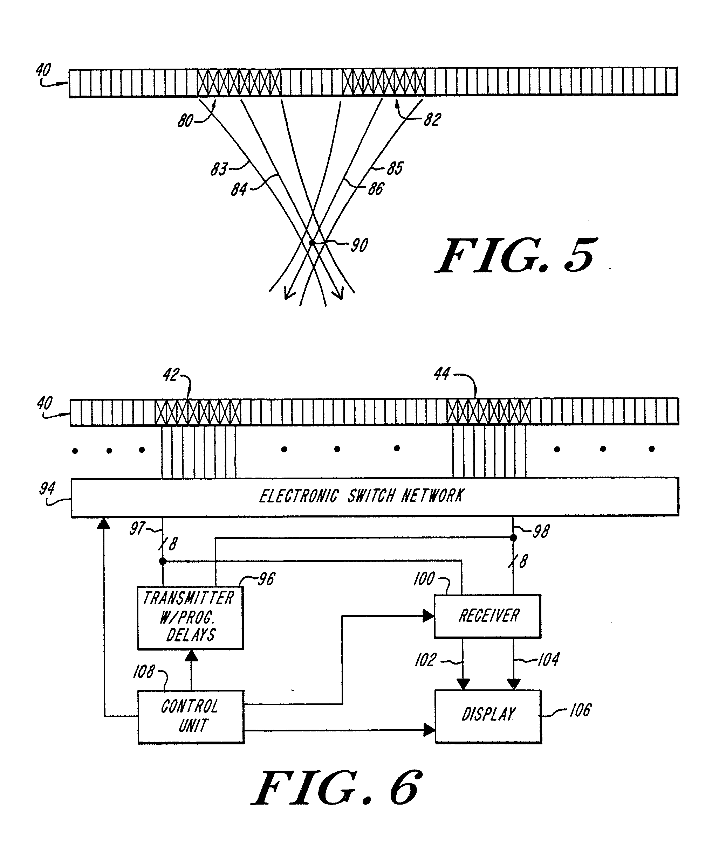

In the embodiments of FIGS. 2-4, the scan lines produced by the apertures 42 and 44 are parallel to each other. Another application of the multiple aperture configuration of the present invention is illustrated in FIG. 5. In the array 40, a first set of transducer elements is energized, as indicated by shading, to form an acoustic aperture 80, and a second set of transducer elements is energized to form an acoustic aperture 82. The aperture 80 directs an ultrasonic beam 83 along a scan line 84, and the aperture 82 directs an ultrasonic beam 85 along a scan line 86. The scan lines 84 and 86 are oriented at angles relative to the respective aperture normals. The spacing between apertures 80 and 82 and the angles of beams 83 and 85 are selected so that the scan lines 84 and 86 intersect at a predetermined point 90. The apertures 80 and 82 are energized such that the ultrasonic pulses arrive at point 90 simultaneously, even though the respective distances from apertures 80 and 82 to point 90 may be different. The reflections from point 90 are received by apertures 80 and 82 and provide two components of actual blood velocity. As a result, more accurate blood flow information is obtained.

A simplified block diagram of an ultrasound imaging system using linear scanning of multiple apertures is shown in FIG. 6. The transducer elements of linear array 40 are each coupled to an electronic switch network 94 which defines acoustic apertures by selecting groups of transducer elements for transmitting and receiving ultrasonic beams. In the example of FIG. 6, acoustic apertures 42 and 44, each comprising eight transducer elements, are selected. Electronic switch network 94 couples the selected transducer elements to a transmitter 96 having programmable delays as shown in FIGS. 2 or 3. The transmitter 96 provides appropriately delayed ultrasonic pulses on an eight-line bus 97 to the transducer elements of aperture 42 and on an eight-line bus 98 to the transducer elements of aperture 44.

The buses 97 and 98, respectively coupled to apertures 42 and 44, are also coupled to a receiver 100. The receiver 100 delays the received signals from each transducer element of apertures 42 to effect focusing and steering, and combines the delayed signals to produce a first signal 102 representative of the image received by aperture 42. The receiver also delays the received signals from each transducer element of aperture 44 to effect focusing and steering, and combines the delayed signals to produce a second signal 104 representative of the image received by aperture 44. The signals 102 and 104 are supplied to a display 106, typically a CRT, for display of the sequential scan lines. The display 106 provides a rectangular or parallelogram-shaped display of the image space. A control unit 108 supplies control signals to the switch network 94 for selection of transducer elements, to the transmitter 96 and the receiver 100 for selection of delays and to the display 106 for control thereof.

The switch network 94 can be considered a multiplexer between the transducer elements and the processing electronics. A preferred multiplexer is a "tractor-treading" multiplexer. In this type of multiplexer, the acoustic aperture, or scanning windows, each of n transducer elements (which extend from a first element $(x)$ to a last element $(x + n)$) is moved along the linear array 40 by changing the connection between two elements in the array and the processing electronics. In particular, each acoustic aperture is moved by disconnecting the first element $(x)$ and connecting in its stead the next transducer element adjacent to the last element (i.e., $x + n + 1$). This causes the entire acoustic aperture to be shifted by one element (thus, the new acoustic aperture extends from $x + 1$ to $x + n + 1$). However, since only the connections on two elements are changed, the rest of the $n - 1$ transducer elements remain connected to the same processing channels to which they were connected during the previous scan. A tractor-treading technique is disclosed in U.S. Patent No. 4,242,912 issued January 6, 1981 to Burckhardt et al which is incorporated herein by reference.

For a focused array system, each of the received transducer signals must be processed in a precise manner using predetermined phase compensations and delay tap selections in the processing electronics. These phase and tap variables are related to the elements' relative positions in the acoustic aperture. Since the tractor-treading, or transducer multiplexer, cyclically rotates the relative positions of the elements in the acoutic aperture with respect to the cable leads, the received signals must be cyclically de-rotated, or de-multiplexed. This can be done either by cyclically connecting the respective cable leads to the various processing channels or by cyclically changing the processing constants for each channel.

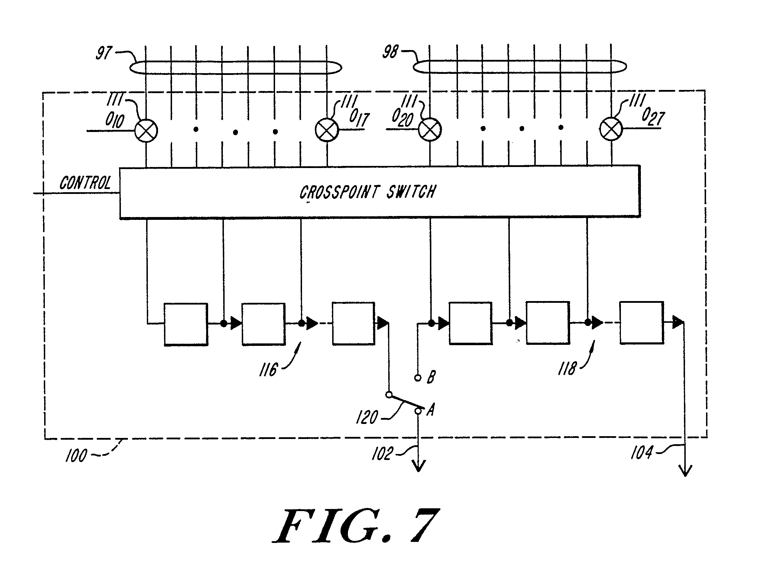

A simplified block diagram of the receiver 100 is shown in FIG. 7. Each line in the bus 97 and the bus 98 is connected to to a mixer 111. Each mixer 111 also receives an oscillator signal $(O_{10}$---$O_{17}$ and $O_{20}$---$O_{27})$ having a preselected phase and provides a phase shifted received signal to a crosspoint switch 112. It will be understood that the received signals are typically amplified by preamplifiers (not shown). The crosspoint switch 112 couples the phase shifted received signals to selected points in summing tapped delay lines 116 and 118. It will be understood that more than one phase shifted signal can be switched by crosspoint switch 112 to any tap on the respective delay lines 116 and 118. The total delays introduced by mixers 111 and summing delay lines 116 or 118 effectively focus the apertures 42 and 44 at desired points along the respective scan lines. By connecting the received signal near the output of the delay line 116, a short delay is introduced, while connecting the received signal near the input of the delay line 116 introduces a relatively long delay. The phase shifted signals from bus 97 are summed as they pass through delay line 116, and the phase shifted signals from bus 98 are summed as they pass through delay line 118. The outputs of the delay lines 116 and 118 on lines 102 and 104 represent the images along the respective scan lines of apertures 42 and 44. A preferred technique for implementing delays utilizing heterodyning means (mixers) and tapped delay lines is disclosed in U.S. Patent No. 4,140,022 issued February 20, 1979 to Maslak, which is incorporated herein by reference.

According to another aspect of the present invention, the ultrasound imaging system illustrated in FIGS. 6 and 7 can operate in a single aperture mode or a double aperture mode. In the single aperture mode, a relatively wide aperture is utilized for scanning of relatively deep organs. In this mode, the electronic switch network 94 selects a single group of adjacent transducer elements (16 adjacent elements in the example of FIG. 6), and the transmitter 96 provides suitable delays to transmit a focused ultrasonic beam through buses 97 and 98 to the single 16-element aperture. The received signals carried on buses 97 and 98 are connected to crosspoint switch 112, as shown in FIG. 7, and a switch 120, which may be electronically controlled, is moved from position A to position B so that the output of delay line 116 is supplied to the input of delay line 118. In position B of switch 120, delay lines 116 and 118 are effectively combined as a single, longer delay line, and the output signal for the wide aperture is supplied on line 104. In the two aperture mode, the system operates as described hereinabove so as to simultaneously energize spaced-apart apertures 42 and 44. In a preferred embodiment, the linear array 40 contains 288 transducer elements. In the single aperture mode, 96 adjacent trasducer elements are energized for imaging depths up to 6 centimeters.

In the dual aperture mode, two spaced-apart apertures of 48 adjacent transducer elements each are energized for linear scanning of organs up to 3 centimeters in depth.

## Claims

1. A scanner (40) for use in acoustic imaging apparatus characterised in that it comprises: an array of acoustic transducer elements ($40_1$-$40_3$) for transmitting accoustic pulses and for receiving acoustic pulse echoes; a plurality of transmitter means (97,98), each transmitter means (97,98) energising a different set of adjacent transducer elements ($40_1$-$40_3$) which define an acoustic aperture (42,44) for transmitting phased acoustic pulses that form a beam that emanates from the aperture (42,44) along a scan line (50,56); and receiver means (100) for processing acoustic pulses echoes, received by the acoustic apertures (42,44), and producing a plurality of signals that are representative of the images along the scan lines (50,56), the acoustic apertures (42,43) transmitting phased acoustic pulses and receiving acoustic pulse echoes concurrently.

2. A scanner (40) as defined in claim 1 further comprising means for sequentially displacing the acoustic apertures along the transducer elements ($40_1$-$40_3$) of the array to produce a plurality of signals from each individual aperture (42, 44) representative of images along a plurality of different scan lines (50,56).

3. A scanner (40) as defined in claim 1 or 2 wherein all of the acoustic apertures (42,44) are energised substantially simultaneously.

4. A scanner (40) as defined in any preceding claim wherein the scan lines (50,56) are substantially parallel.

5. A scanner (40) as defined in any preceding claim wherein the array of transducer elements ($40_1$-$40_3$) is a linear array.

6. A scanner (40) as defined in claim 5 wherein the scan lines (50,56) are perpendicular to the linear array.

7. A scanner (40) as defined in claim 5 or 6 wherein the scan lines (50, 56) are oriented at a predetermined angle to a normal to the array.

8. A scanner (40) as defined in any of claims 2 to 7 wherein the acoustic apertures (42,43) are spaced apart by a predetermined number of transducer elements ($40_1$-$40_3$) as they are displaced along the array.

9. A scanner (40) as defined in claim 7 or 8 wherein pairs of scan lines (50,56) intersect at preselected points and the acoustic pulses are transmitted along the scan lines (50,56) so that pulses travelling along intersecting scan lines (50,56) arrive at the intersection substantially simultaneously, whereby the acoustic echoes received by the acoustic apertures (42,43) provide two components of velocity at the points of intersection.

10. A method for operating a scanner (40) for use in acoustic apparatus, including an array of acoustic transducer elements ($40_1$-$40_3$) for transmitting acoustic pulses and for receiving acoustic pulse echoes; the method being characterised in that two different sets of adjacent elements ($40_1$-$40_3$) are energised simultaneously ; wherein each set defines an acoustic aperture (42,44) for transmitting a beam of phased acoustic pulses from the aperture (42,44), along a scan line (50,56), and for receiving acoustic pulse echoes; wherein each aperture (42,44) transmits phased acoustic pulses and receives acoustic pulse echoes concurrently.

11. A method according to claim 10 wherein one or both of the acoustic apertures (42,44) are sequentially displaced along the array of transducer elements ($40_1$-$40_3$) during the operation of the scanner (40).

12. A method according to claim 11 wherein each moving acoustic aperture (42,44) transmits a predetermined number of phased acoustic pulses before it is displaced.

*FIG. 1*

(PRIOR ART)

*FIG. 2*

*FIG. 3*

*FIG. 4*

FIG. 5

FIG. 6

FIG. 7